(19) Europäisches Patentamt

European Patent Office

Office européen des brevets

(11) Veröffentlichungsnummer : **0 548 040 A1**

## (12) EUROPÄISCHE PATENTANMELDUNG

(21) Anmeldenummer : **92890218.8**

(22) Anmeldetag : **14.10.92**

(51) Int. Cl.⁵ : **C08K 5/01,** B60C 1/00, C08L 21/00

(30) Priorität : **18.12.91 AT 2506/91**

(43) Veröffentlichungstag der Anmeldung : **23.06.93 Patentblatt 93/25**

(84) Benannte Vertragsstaaten : **AT DE FR GB IT LU**

(71) Anmelder : **Semperit Reifen Aktiengesellschaft Wienersdorferstrasse 20-24 A-2514 Traiskirchen (AT)**

(72) Erfinder : **Hausmann, Bernadette, Dr. Schneebergstrasse 33a A-2734 Puchberg (AT)**

(74) Vertreter : **Vinazzer, Edith et al Semperit Reifen Aktiengesellschaft Patentabteilung Wienersdorferstrasse 20-24 A-2514 Traiskirchen (AT)**

(54) **Fahrzeugreifen.**

(57)    Fahrzeugreifen mit einem Laufstreifen aus einer Kautschukmischung, die, bezogen auf 100 Gewichtsteile Kautschuk, einen Weichmacheranteil von 2 bis 50 Gewichtsteilen enthält. Nach der Erfindung enthält die Laufstreifenkautschukmischung als Weichmacher zumindest zum Teil vollsynthetisches Öl mit einem Viskositätsindex (nach DIN ISO 2909) von > 130, insbesondere > 140.

Fig. 1

Die Erfindung betrifft einen Fahrzeugreifen mit einem Laufstreifen aus einer Kautschukmischung, die bezogen auf 100 Gewichtsteile Kautschuk, einen Weichmacheranteil von 2 bis 50 Gewichtsteilen enthält.

Es ist bekannt, daß die Eignung von Fahrzeugreifen, und zwar sowohl von Reifen für Personenkraftwagen als auch für Schwerlastfahrzeuge, unter winterlichen und/oder sommerlichen Fahrbedingungen nicht nur von der Laufstreifenprofilgestaltung abhängig ist, sondern daß auch der für die Laufstreifen verwendeten Kautschukmischung eine besondere Bedeutung zukommt. Durch die Wahl der Laufstreifenmischung lassen sich im allgemeinen die verschiedenen Reifeneigenschaften nur in bestimmten Richtungen beeinflussen. Eine für den Tieftemperaturbereich geeignete Laufstreifenmischung soll am fertigen Laufstreifen bei tiefen Temperaturen eine vergleichsweise geringe Steifigkeit aufweisen, um gute Griffeigenschaften auf schneeigem oder eisigem Untergrund zu gewährleisten. Idealerweise sollte dann derselbe Reifen bei höheren Temperaturen und auf trockener Fahrbahn eine relativ hohe Steifigkeit aufweisen, um im Handling, also im Fahrverhalten, zu entsprechen. Gleichzeitig sollen weitere Reifeneigenschaften, bzw. der Einfluß der Laufstreifenmischung auf diese Eigenschaften, wie etwa Rollwiderstand und Naßgriff nicht außer acht gelassen werden.

Unter anderem wurde nun beispielsweise vorgeschlagen, durch die Auswahl der Polymere und Polymerverschnitte und/oder die Wahl eines geeigneten Weichmachers die oben angesprochenen Probleme in den Griff zu bekommen. Dabei werden insbesondere hocharomatische, naphtenische oder paraffinische Mineralöle sowie Weichmacher auf Esterbasis, auch als gemischte Systeme, verwendet. In diesem Zusammenhang wird zum Beispiel auf die EP-A 0216588 verwiesen, in der eine Kautschukmischung für einen Laufstreifen vorgeschlagen wird, die einen Tieftemperaturweichmacher auf Esterbasis und als Kautschukbestandteil einen Verschnitt zweier dieser Kautschuke mit Glasübergangstemperaturen in bestimmten Bereichen aufweist. Laufstreifen aus derartigen Kautschukmischungen verbessern zwar die Winterfahreigenschaften haben jedoch nicht den erwünschten Effekt bei höheren Temperaturen bzw. auf trockener Fahrbahn.

Hier setzt nun die vorliegende Erfindung ein, deren Aufgabe darin besteht, für einen Reifen eine Laufstreifenmischung zu entwickeln, die unter winterlichen Fahrbedingungen sehr gut entspricht, insbesondere sehr gute Griffeigenschaften und bei höheren Temperaturen und auf trockener Fahrbahn gegenüber bekannten Mischungen verbesserte Handlingseigenschaften, wie etwa gute Geradeauslaufstabilität und Kurvenstabilität, gewährleistet.

Gelöst wird die gestellte Aufgabe erfindungsgemäß dadurch, daß die Laufstreifenkautschukmischung als Weichmacher zumindest zum Teil vollsynthetisches Öl mit einem Viskositätsindex (nach DIN ISO 2909) > 130, insbesondere > 140 enthält.

Es wurde festgestellt, daß durch den Einsatz von vollsynthetischem Öl mit einem Viskositätsindex > 130, das bisher in Laufstreifenkautschukmischungen noch nicht verwendetet wurde, überraschend gute Ergebnisse erzielt werden konnten. So hat sich insbesondere herausgestellt, daß Laufstreifen aus derartigen Kautschukmischungen im Bereich tiefer Temperaturen, insbesondere im Bereich zwischen -40° und -10° C eine gegenüber bekannten Mischungen deutlich herabgesetzte Steifigkeit aufweisen.

Damit ist gewährleistet, daß sich der Reifen auch im extremen Winterbetrieb den Unebenheiten des Untergrundes sehr gut anpaßt, somit also sehr gute Griffeigenschaften vorliegen. Bei höheren Temperaturen und auf trockener Fahrbahn zeigt der Laufstreifen hingegen nicht das bei bekannten Mischungen übliche und unerwünschte Erweichungsverhalten, sondern der Laufstreifen besitzt weiterhin eine Steifigkeit, die ein sehr gutes Handlingverhalten bewirkt. Dieser positive Effekt dürfte insbesondere auf den hohen Viskositätsindex des zugesetzten vollsynthetischen Öles zurückzuführen sein. Gegenüber dem Einsatz von bekannten Ester-Weichmachern ist vor allem das gleichzeitig gute Nässeverhalten hervorzuheben.

Nach einem weiteren Merkmal der Erfindung ist das vollsynthetische Öl ein Öl auf Kohlenwasserstoffbasis.

Gemäß einer bevorzugten Ausgestaltung der Erfindung hat das der Laufstreifenkautschukmischung beigemengte vollsynthetische Öl einen Viskositätsindex $\geq$ 150. Mit einer solchen Laufstreifenmischung gefertigte Reifen haben beste Ergebnisse geliefert.

Zur Erzielung der genannten Eigenschaftsverbesserung ist es dabei von Vorteil, wenn der Anteil des vollsynthetischen Öles, bezogen auf 100 Gewichtsteile Kautschuk, mindestens 2 Gewichtsteile beträgt.

Optimale Ergebnisse lassen sich dann erzielen, wenn das vollsynthetische Öl, bezogen auf 100 Gewichtsteile Kautschuk, in einer Menge von 10 bis 20 Gewichtsteilen der Laufstreifenkautschukmischung beigemengt ist.

Nach einer bevorzugten Ausführungsform der Erfindung wird als vollsynthetisches Öl ein vollsynthetisches Schmieröl, insbesondere ein Mehrbereichsmotoröl, welches aus Oligmeren von $\alpha$ -Olefinen besteht, der Laufstreifenkautschukmischung zugesetzt. Dabei hat sich das vollsynthetische Motoröl Mobil SHF 401 als besonders geeignet erwiesen.

Ausgezeichnete Ergebnisse lassen sich auch dann erzielen, wenn neben dem vollsynthetischen Öl der Laufstreifenkautschukmischung ein oder mehrere Weichmacher aus der Gruppe der hocharomatischen, naphtenischen oder paraffinischen Mineralöle beigemengt sind.

Bezüglich des eingesetzten Polymeres oder Polymerverschnittes gibt es kaum Einschränkungen, da sämtliche für Laufstreifen, und zwar sowohl für Winterreifen als auch für Sommerreifen, üblichen Polymere bzw. Kautschuke eingesetzt werden können. Besonders geeignet für eine Laufstreifenmischung auch im Zusammenhang mit der Erfindung sind jedoch Kautschuke aus der Gruppe der Naturkautschuke oder Synthesekautschuke oder ein Verschnitt dieser beiden Kautschuktypen.

Der Kautschukmischung selbst werden darüber hinaus als itere Mischungsbestandteile und zwar jeweils in den für Laufstreifenmischungen üblichen Gewichtsanteilen Ruß, zumindest ein Alterungsschutzmittel, gegebenenfalls ein Lichtschutzmittel, Stearinsäure, Zinkoxyd, Vulkanisationsbeschleuniger und Schwefel beigemengt.

Die Erfindung selbst sowie weitere Merkmale und Vorteile derselben werden nun anhand einiger Beispiele näher erläutert.

Vorab werden die in der Tabelle 1 enthaltenen Begriffe bzw. die Methode ihrer Ermittlung näher erläutert:

Spannungswert:

Die Spannungswerte wurden in Übereinstimmung mit DIN 53504 ermittelt.

Shore A Härte:

Die Tests wurden gemäß DIN 53505 bei Raumtemperatur, bei 70°C und im Kälteschrank bis Lufttemperaturen von -10°C durchgeführt.

Dynamischer Speichermodul E':

Der dynamische Speichermodul wurde an einem "Eplexor" der Firma Gadum gemessen (Frequenz 10 Hertz, kraftkonstant, statische Spannung 0,64 MPa, dynamische Spannung $\pm$ 0,38 MPa), unter Verwendung zylindrischer Prüfkörper mit einem Durchmesser von 10 mm und 10 mm Höhe.

Die Tabelle 1 enthält Mischungsbeispiele 1, 2 und 3, die nach der vorliegenden Erfindung hergestellt wurden und mit einer Vergleichsmischung VM1 verglichen wurden. Bei diesen Mischungen stimmten das Polymersystem (80 Gewichtsteile Naturkautschuk, 20 Gewichtsteile Cis Butadien Kautschuk) sowie die weiteren Mischungsbestandteile, mit Ausnahme der Weichmacheranteile, bezüglich ihrer jeweiligen Anteile überein. In den Mischungsbeispielen 1, 2 und 3 wurde als Weichmacher ein vollsynthetisches Öl mit einem Viskositätsindex von 150, zum Teil gemeinsam mit einem aromatischen Mineralöl (Beispiele 1 und 2) verwendet. Der beschriebene Effekt einer günstigen Beeinflussung der Steifigkeit läßt sich insbesondere daraus ersehen, daß bei Proben aus den Mischungen 1, 2 und 3, mit einem steigenden Anteil von vollsynthetischem Öl, die Shore Härte Differenz $\Delta$ SH (gemessen an Proben bei 70°C und -10°C) mit steigendem Anteil an vollsynthetischem Öl signifikant kleiner wird und auf alle Fälle kleiner ist als bei der Probe aus der Vergleichsmischung VM 1. Auch die Differenz $\Delta$ E' (E'-Differenz von Proben bei -40°C und bei 100°C) ist bei den Mischungen 1, 2 und 3 geringer als bei der Vergleichsmischung VM 1 und verringert sich deutlich mit zunehmendem Anteil an vollsynthetischem Öl als Weichmacher.

Die Beispiele 4, 5 und VM2 enthalten als Polymer ausschießlich SBR (Styrolbutadienrubber). Im Vergleich zur Vergleichsmischung VM2, wo ausschließlich aromatisches Mineralöl enthalten war, zeigen sich ähnlich gute Ergebnisse wie bei den Mischungen 1, 2 und 3.

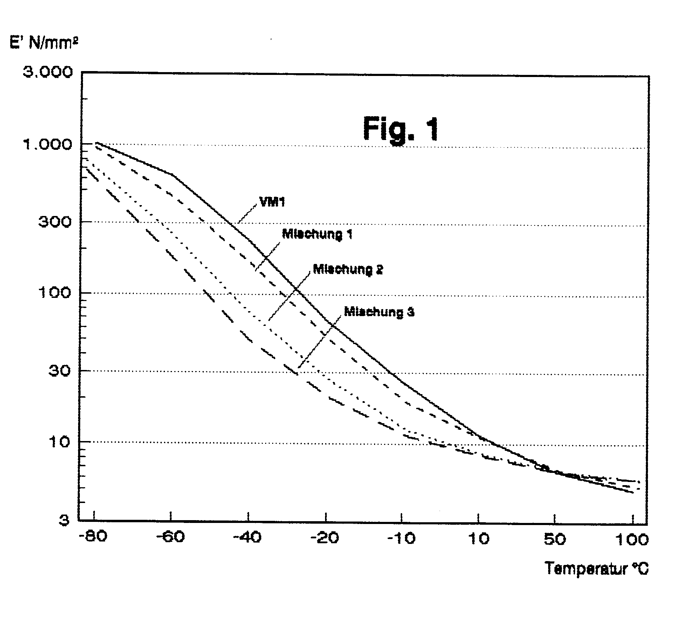

Fig. 1 zeigt ein Diagramm, welches den mit nach der Erfindung hergestellten Proben gemäß den Beispielen 1, 2 und 3 im Vergleich zur Vergleichsmischung VM1 erzielten Effekt in sehr übersichtlicher Form wiedergibt. Dabei ist auf der Ordinate der dynamische Speichermodul E' in logarithmischer Skala aufgetragen, auf der Abzissee die Temperatur in ° C. Man sieht deutlich, daß die aus den Mischungen 1, 2 und 3 hergestellten Proben im Tieftemperaturbereich, also etwa im Bereich zwischen -40 und -10°C, eine gegenüber den Proben aus der Vergleichsmischung VM1 deutlich geringere Steifigkeit aufweisen, die dann in einem höheren Temperaturbereich sehr konstant verläuft und höher ist als jene der Vergleichsmischung VM1.

Es wurden ferner Reifenprüfungen mit Laufstreifen, deren Mischungszusammensetzung nach der Erfindung erfolgte, durchgeführt und es zeigte sich, daß diese Reifen eine deutliche Verbesserung der Wintereigenschaften, insbesondere des Griffes auf schneeiger und eisiger Fahrbahn aufwiesen. Auf trockener Fahrbahn und bei sommerlichen Temperaturen waren ausgezeichnete Handlingseigenschaften, also insbesondere eine sehr gute Kurvenstabilität und eine sehr gute Geradeauslaufstabilität, feststellbar. Im Naßgriff konnte ein gleich gutes Verhalten wie bei Vergleichsreifen, die herkömmliche Laufstreifenmischungen enthielten, festgestellt werden.

Geeignet sind insbesondere Öle auf Kohlenwasserstoffbasis, wie vollsynthetische Schmieröle, beispielsweise ein Motoröl, welches aus Oligmeren von $\alpha$ -Olefinen besteht. Das vollsynthetische Öl sollte einen Viskositätsindex (nach DIN-ISO 2909) von mindestens 130, insbesondere von mindestens ca. 150 aufweisen. Der Anteil an vollsynthetischem Öl soll dabei mindestens 2 Gewichtsteile, bezogen auf 100 Gewichtsteile Kautschuk, insbesondere 10 bis 20 Gewichtsteile betragen.

Die Erfindung ist auf die beschriebenen Mischungsbeispiele nicht eingeschränkt. Im Rahmen der Erfindung können auch andere vollsynthetische Öle bzw. zwei und mehr Mineralöle als Weichmacher eingesetzt bzw. zugesetzt werden, soferne diese einen Viskositätsindex von > 130 aufweisen. Selbstverständlich können diese vollsynthetischen Öle gemeinsam mit den sonst bei Laufstreifenmischungen üblichen Weichmachern, wie naphtenischen, paraffinischen und mineralischen Ölen sowie Weichmachern auf Esterbasis zugesetzt werden.

| | VM1 | 1 | 2 | 3 | VM2 | 4 | 5 |
|---|---|---|---|---|---|---|---|
| NR (MA 1030B3) | 80 | 80 | 80 | 80 | | | |
| SBR (KER 1500) | | | | | 100 | 100 | 100 |
| Cis Butadien Rubber (Europrene Cis) | 20 | 20 | 20 | 20 | | | |
| Aktivruß (N-234) | 72 | 72 | 72 | 72 | 72 | 72 | 72 |
| Mineral. Öl arom. | 40 | 30 | 20 | | 40 | 30 | 20 |
| Vollsynth. Öl* | | 10 | 20 | 40 | | 10 | 20 |
| Alterungsschutzmittel 1 (Wingstgay 100) | 0,75 | 0,75 | 0,75 | 0,75 | 0,75 | 0,75 | 0,75 |
| Alterungsschutzmittel 2 (6PPD) | 2 | 2 | 2 | 2 | 2 | 2 | 2 |
| Lichtschutzwachs | 1 | 1 | 1 | 1 | 1 | 1 | 1 |
| Stearinsäure | 2 | 2 | 2 | 2 | 2 | 2 | 2 |
| ZnO | 4 | 4 | 4 | 4 | 4 | 4 | 4 |
| Vulkanisationsbe-schleuniger (TBBS) | 1,8 | 1,8 | 1,8 | 1,8 | 1,8 | 1,8 | 1,8 |
| Schwefel | 1,8 | 1,8 | 1,8 | 1,8 | 1,8 | 1,8 | 1,8 |
| Mooney-Viskosität unvulkanisiert | 62 | 61 | 57 | 51 | 51 | 49 | 49 |
| Spannungswert [MPa] 50% | 1,1 | 1,2 | 1,1 | 1,1 | 1,0 | 0,97 | 1,0 |
| 100% | 2 | 2,0 | 1,9 | 2,3 | 1,6 | 1,5 | 1,6 |
| 150% | 3,2 | 3,4 | 3,4 | 4,0 | 2,5 | 2,4 | 2,7 |
| Shore Härte [ShA] Raumtemp. | 62 | 62 | 59 | 60 | 59 | 58 | 60 |
| 70°C | 54 | 55 | 54 | 55 | 53 | 53 | 56 |
| -10°C | 74 | 72 | 65 | 64 | 73 | 72 | 72 |
| $\Delta$SH (70°/-10°) | 20 | 17 | 11 | 9 | 20 | 19 | 16 |
| E' [N/mm$^2$]     -40°C | 214 | 142,9 | 82,2 | 58,9 | 852 | 612,5 | 561,6 |
| -20°C | 48,5 | 35,8 | 19,0 | 16,1 | 143,5 | 93,2 | 85,5 |
| -10°C | 25,8 | 20,2 | 12,3 | 11,4 | 61,8 | 42,4 | 35,6 |
| 10°C | 11,8 | 10,5 | 7,6 | 7,5 | 19,5 | 16,1 | 12,3 |
| 50°C | 5,0 | 6,3 | 5,3 | 5,3 | 6,8 | 6,4 | 6,8 |
| 100°C | 4,7 | 5,1 | 4,9 | 5,0 | 4,5 | 4,7 | 4,6 |
| $\Delta$E'(E'(-40°C)/E'(100°C)) | 209,3 | 137,8 | 77,3 | 53,9 | 847,5 | 607,8 | 557 |

*Mobil SHF 401
Viskositätsindex: 150 (nach DIN ISO 2909)

**Patentansprüche**

1. Fahrzeugreifen mit einem Laufstreifen aus einer Kautschukmischung, die bezogen auf 100 Gewichtsteile Kautschuk einen Weichmacheranteil von 2 bis 50 Gewichtsteilen enthält, dadurch gekennzeichnet, daß die Laufstreifenkautschukmischung als Weichmacher zumindest zum Teil vollsynthetisches Öl mit einem Viskositätsindex (nach DIN ISO 2909) von > 130, insbesondere > 140 enthält.

2. Fahrzeugreifen nach Anspruch 1, dadurch gekennzeichnet, daß das vollsynthetische Öl ein Öl auf Kohlenwasserstoffbasis ist.

3. Fahrzeugreifen nach Anspruch 1 oder 2, dadurch gekennzeichnet, daß das vollsynthetische Öl einen Viskositätsindex $\geq$ 150 aufweist.

4. Fahrzeugreifen nach einem der Ansprüche 1 bis 3, dadurch gekennzeichnet, daß die Laufstreifenkautschukmischung mindestens 2 Gewichtsteile des vollsynthetischen Öles, bezogen auf 100 Gewichtsteile Kautschuk, enthält.

5. Fahrzeugreifen nach einem der Ansprüche 1 bis 4, dadurch gekennzeichnet, daß die Laufstreifenkautschukmischung zwischen 10 und 20 Gewichtsteile des vollsynthetischen Öles, bezogen auf 100 Gewichtsteile Kautschuk, enthält.

6. Fahrzeugreifen nach einem der Ansprüche 1 bis 5, dadurch gekennzeichnet, daß das vollsynthetische Öl ein vollsynthetisches Schmieröl, insbesondere ein Mehrbereichsmotoröl, welches aus Oligmeren von α-Olefinen besteht, ist.

7. Fahrzeugreifen nach einem der Ansprüche 1 bis 6, dadurch gekennzeichnet, daß die Kautschukmischung als vollsynthetisches Öl das Motoröl Mobil SHF 401 enthält.

8. Fahrzeugreifen nach einem der Ansprüche 1 bis 7, dadurch gekennzeichnet, daß die Laufstreifenkautschukmischung als sonstigen Weichmacher zumindest eines der Öle aus der Gruppe der hocharomatischen, naphtenischen oder paraffinischen Mineralöle enthält.

9. Fahrzeugreifen nach einem der Ansprüche 1 bis 8, dadurch gekennzeichnet, daß die Kautschukmischung für den Laufstreifen als Kautschuk-Komponente einen Naturkautschuk oder einen Synthesekautschuk oder einen Verschnitt dieser beiden Kautschuktypen enthält.

10. Fahrzeugreifen nach Anspruch 9, dadurch gekennzeichnet, daß die Kautschukmischung für den Laufstreifen als weitere Mischungsbestandteile Ruß, zumindest ein Alterungsschutzmittel, gegebenenfalls ein Lichtschutzmittel, Stearinsäure, Zinkoxyd, einen Vulkanisationsbeschleuniger und Schwefel, jeweils in den für Laufstreifenmischungen üblichen Gewichtsanteilen, enthält.

Fig. 1

EP 0 548 040 A1

**Europäisches Patentamt**

# EUROPÄISCHER RECHERCHENBERICHT

Nummer der Anmeldung

EP 92 89 0218

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DATABASE WPIL<br>Section Ch, Week 2885,<br>Derwent Publications Ltd., London, GB;<br>Class A, AN 85-168994<br>& JP-A-60 099 145 (TOYO RUBBER IND KK) 3. Juni 1985<br>* Zusammenfassung *<br>--- | 1-10 | C08K5/01<br>B60C1/00<br>C08L21/00 |
| X | DATABASE WPIL<br>Section Ch, Week 4685,<br>Derwent Publications Ltd., London, GB;<br>Class A, AN 85-287200<br>& JP-A-60 197 751 (TOYO RUBBER IND KK) 7. Oktober 1985<br>* Zusammenfassung *<br>--- | 1-10 | |
| A | DATABASE WPIL<br>Section Ch, Week 0285,<br>Derwent Publications Ltd., London, GB;<br>Class A, AN 85-9445<br>& JP-A-59 207 948 (IDEMITSU PETROCHEM IND KK) 26. November 1984<br>* Zusammenfassung *<br>--- | 1 | |
| A | US-A-2 900 357 (G.W.AYERS ET AL.)<br>18. August 1959<br>* Spalte 2, Zeile 47 - Zeile 61; Anspruch 5 *<br>* Beispiele *<br>----- | 1 | **RECHERCHIERTE SACHGEBIETE (Int. Cl.5)**<br><br>C08K<br>B60C |

Der vorliegende Recherchenbericht wurde für alle Patentansprüche erstellt

| Recherchenort | Abschlußdatum der Recherche | Prüfer |
|---|---|---|
| DEN HAAG | 06 APRIL 1993 | VAN HUMBEECK F. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument

7